# EUROPEAN PATENT APPLICATION

(11) **EP 1 367 477 A2**
(43) Date of publication of application: **03.12.2003**
(21) Application number: 03005422.5
(22) Date of filing: 13.03.2003
(51) Int. Cl.: G06F 1/16, G06F 3/033

(54) **Information processing apparatus**

(30) Priority: 31.05.2002 JP 2002159987
(71) Applicant: Kabushiki Kaisha Toshiba, Tokyo (JP)
(72) Inventor: Numano, Fujihito, Kabushiki Kaisha Toshiba, Minato-ku, Tokyo 105-8001 (JP)
(74) Representative: Henkel, Feiler, Hänzel

(57) **Abstract**

Information displayed on a main display is selected (S1), and the selected information is displayed on a sub-display. A GUI corresponding to the type of selected information is displayed on the sub-display (S4). The information displayed on the sub-display is edited (S6), and the edited information is displayed at the original position on the main display (S8).

## Description

The present invention relates to an information processing apparatus which comprises a tablet device having a sub-display in addition to a main display.

Recent OSs (operating systems) allow different programs to run on a plurality of windows. When a program such as a wordprocessor, spreadsheet software, or the like is running, the user normally directly processes data such as characters, numerals, images, and the like on the corresponding window.

However, for some types of data to be input it is often necessary to display another window having a different function suitable for input, edit the data on that window, and display the edited information on the previous window via a memory (operation for editing information using a plurality of windows).

For example, this operation is done in the following case. That is, when the user wants to paste an image onto a given page on the wordprocessor window, he or she opens another window used to run a program suitable for inputting images and edits image data on that window. Then, the user pastes the edited information onto a page on the previous window.

When the user wants to input a plurality of items of identical information, he or she temporarily stores that information in a memory, and successively inputs it by a "paste" operation. Conventionally, upon editing and pasting the information stored in the memory, the user opens a window used to edit information, pastes information from the memory on that edit window, and edits the information on the edit window. The user stores the edited information in the memory again, switches the edit window to a main window, moves a pointer to a position where information is to be pasted, and pastes the information (operation for editing information stored in a memory).

On the other hand, as disclosed in Jpn. Pat. Appln. KOKAI Publication No. 2000-339097, an information processing apparatus which comprises a tablet device having a sub-display in addition to a main display has been developed in recent years.

This information processing apparatus implements an input function of image information, text information, numerical value information, and the like, a time display function, and the like on the sub-display.

However, the aforementioned operation for editing information using a plurality of windows is made via a plurality of information. For this reason, a pointing operation, and window display and switching operations are required until information is input and the edited information is laid out on a target window, resulting in complicated user operations.

Also, the operation for editing information stored in a memory similarly requires a pointing operation, and window display and switching operations, resulting in complicated user operations.

On the other hand, according to the information processing apparatus disclosed in Jpn. Pat. Appln. KOKAI Publication No. 2000-339097 above, the input function of image information, text information, numerical value information, and the like, time display function, and the like can be implemented on the sub-display. However, since this reference does not disclose any technique for displaying information, which is displayed on the main display, on the sub-display, editing that information, and then displaying the edited information on the main display, it cannot solve the problems experienced in the operation for editing information using a plurality of windows, and the operation for editing information stored in a memory.

The present invention has been made in consideration of the above situation, and provides an information processing apparatus, which can reduce the load on user operations.

According to an embodiment of the present invention, there is provided an information processing apparatus comprising a first display means, a touch interface means having a second display means separate from the first display means, a selection means for selecting information displayed on the first display means such that the selected information is displayed on the second display means, and an edit means for editing the information displayed on the second display means such that the edited information is displayed on the first display means.

According to another aspect of the present invention, there is provided an information processing apparatus comprising a main display, a tablet device having a sub-display separate from the main display, a selection device for selecting an information item displayed on the main display such that the selected information item is displayed on the sub-display, and a processor programmed for managing in the form of a list a predetermined number of selected information items selected by the selection device.

This summary of the invention does not necessarily describe all necessary features so that the invention may also be a sub-combination of these described features.

The invention can be more fully understood from the following detailed description when taken in conjunction with the accompanying drawings, in which:
FIG. 1 is a perspective view showing the outer appearance of an information processing apparatus according to an embodiment of the present invention;
FIG. 2 is a block diagram showing the system arrangement of a computer shown in FIG. 1;
FIG. 3 shows information stored in a main memory 203;
FIG. 4 shows information managed by a history information manager 24;
FIG. 5 is a flow chart for explaining the operation of the information processing apparatus according to the embodiment of the present invention;
FIG. 6 shows information displayed on a main display;
FIG. 7 shows a display window on a sub-display when text information C is selected;
FIG. 8 shows a GUI corresponding to numerical value information;
FIG. 9 shows a GUI corresponding to image information;
FIG. 10 shows a GUI corresponding to text information;
FIG. 11 shows a display screen of the main display when edited text information is pasted;
FIG. 12 shows a window used to edit list information managed in the main memory;
FIG. 13 is a flow chart for explaining the process for editing list information; and
FIG. 14 is a flow chart for explaining the process for editing list information.

An information processing apparatus according to an embodiment of the present invention will be described hereinafter with reference to the accompanying drawings.

The present invention is characterized in that a display-integrated pointing device which integrates a display panel (sub-display) such as an LCD or the like and a tablet or touch interface is provided in addition to a display device (main display) that displays a mouse pointer and the like, and setups and operations of various setup windows and operation windows are allowed on this device. As such display-integrated pointing device, "cPad™" is commercially available from "Synaptics" Incorporated (refer to http://www.synaptics.com/products/cpad.cfm.) An embodiment of the present invention will exemplify an arrangement using cPad (to be referred to as a cPad device hereinafter) as the display-integrated pointing device.

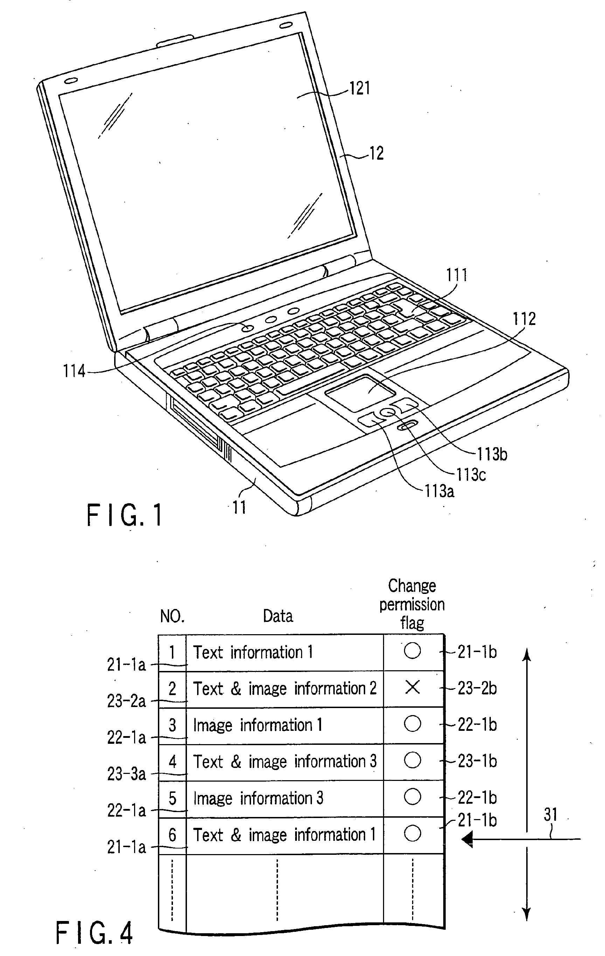

FIG. 1 is a perspective view showing the outer appearance of an information processing apparatus according to an embodiment of the present invention. FIG. 1 exemplifies a notebook type personal computer.

A computer according to the embodiment of the present invention shown in FIG. 1 comprises a computer main body 11 and display unit 12. A display screen (main display) 121 which comprises an LCD is built in the display unit 12.

The display unit 12 is attached to the computer main body 11 to be pivotal between the opened and closed positions. The computer main body 11 has a low-profile, box-shaped housing. A keyboard 111 is arranged on the upper surface of the housing, and the upper surface of the housing portion in front of the keyboard 111 forms an armrest. At nearly the center of this armrest, a cPad device 112, which is used as the display-integrated pointing device, as described above, is arranged together with left, right, and middle user-selectable operators 113a, 113b, and 113c included in that cPad device.

Furthermore, a user-selectable operator such as, but not limited to, power button 114, is used to turn on/off the power supply of the computer main body 11 is arranged on the upper surface of the computer main body 11.

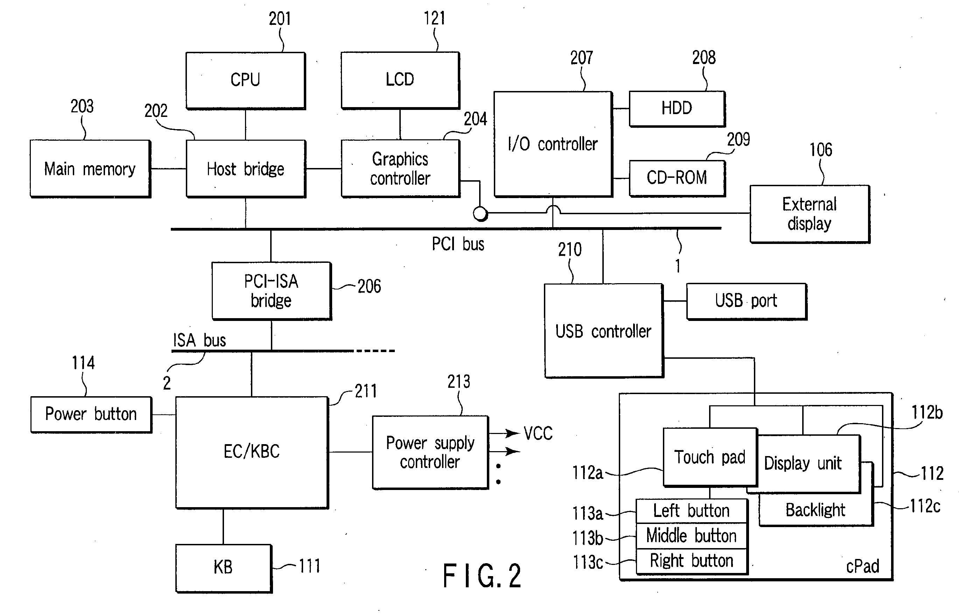

FIG. 2 is a block diagram showing the system arrangement of the computer shown in FIG. 1. This . computer comprises a CPU 201, host bridge 202, main memory 203, graphics controller 204, PCI-ISA bridge 206, I/O controller 207, hard disk drive (HDD) 208, CD-ROM drive 209, USB controller 210, embedded controller/keyboard controller IC (EC/KBC) 211, power supply controller 213, and the like, as shown in FIG. 2.

The aforementioned cPad device 112 is connected to the USB controller 210. This cPad device 112 is formed by integrating a touch pad 112a, display unit 112b, and backlight 112c, and has the left, right, and middle user-selectable operators 113a, 113b, and 113c.

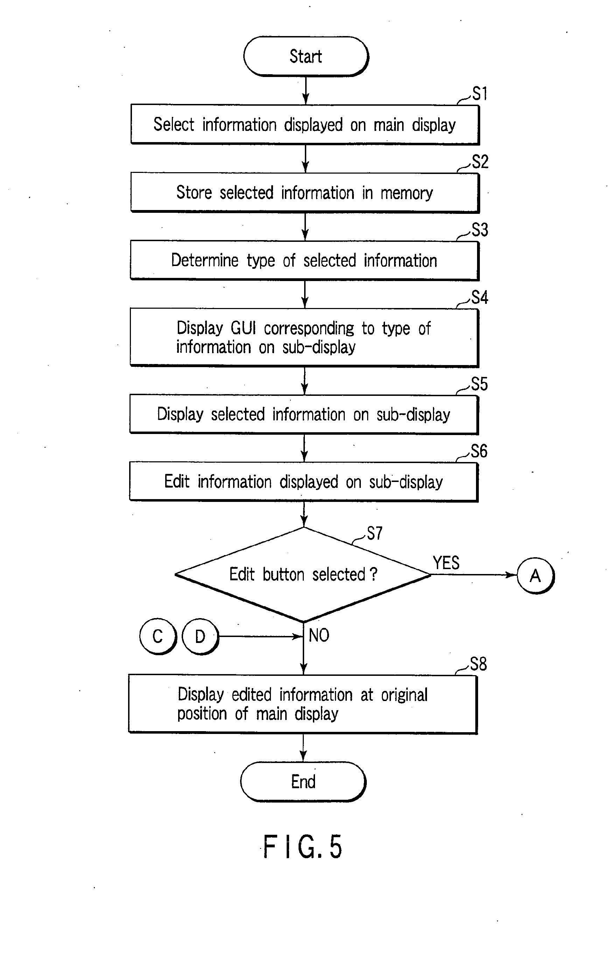

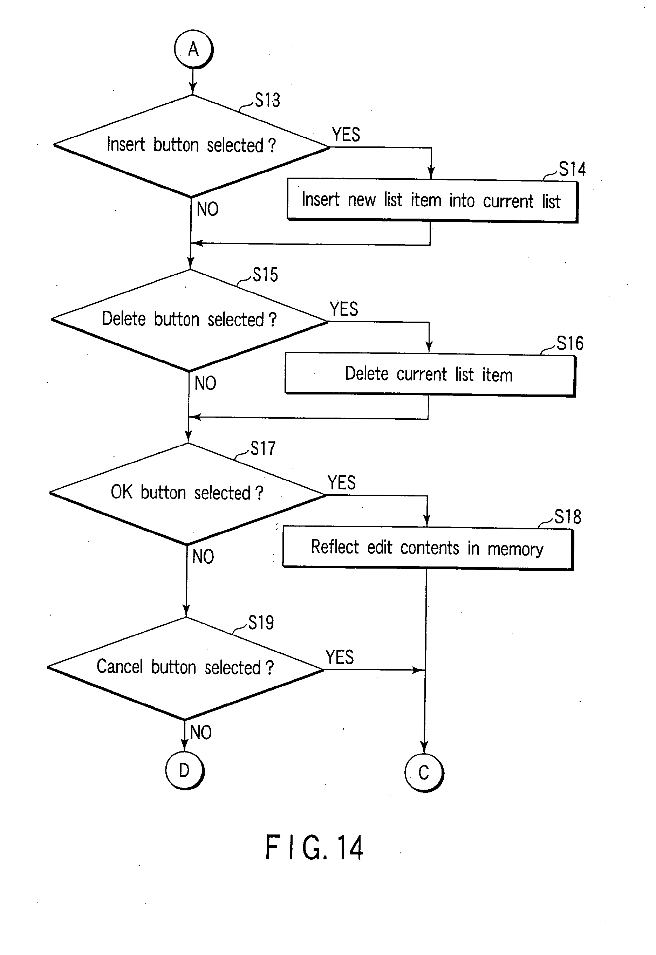

The CPU 201 is provided to control the operation of this computer. The CPU 201 executes an operation system, and application program/utility program, which are loaded from the hard disk drive (HDD) 208 onto the main memory 203. In this embodiment, the CPU 201 executes processes shown in FIGS. 5, 13, and 14. These processes to be executed shown in FIGS. 5, 13, and 14 will be explained later. The host bridge 202 is a bridge device that connects the local bus of the CPU 201, and a PCI bus 1, for bi-directional communication.

The graphics controller 204 controls the main display 121 used as a display monitor of this computer. The graphics controller 204 also controls an external display 106 when such display is connected to an external display connection port.

The I/O controller 207 controls the hard disk drive (HDD) 208, CD-ROM drive 209, and the like. The PCI-ISA bridge 206 is a bridge device that connects the PCI bus 1 and an ISA bus 2 for bi-directional communication. Also, the PCI-ISA bridge 206 incorporates various system devices such as a system timer, DMA controller, interrupt controller, and the like.

The embedded controller/keyboard controller IC (EC/KBC) 211 is a 1-chip microcomputer which integrates an embedded controller (EC) for power management and a keyboard controller (KBC) that controls the keyboard 111. The embedded controller/keyboard controller IC (EC/KBC) 211 has a function of turning on/off the power supply of this computer in response to user' s operation on the power button 114 in collaboration with the power supply controller 213.

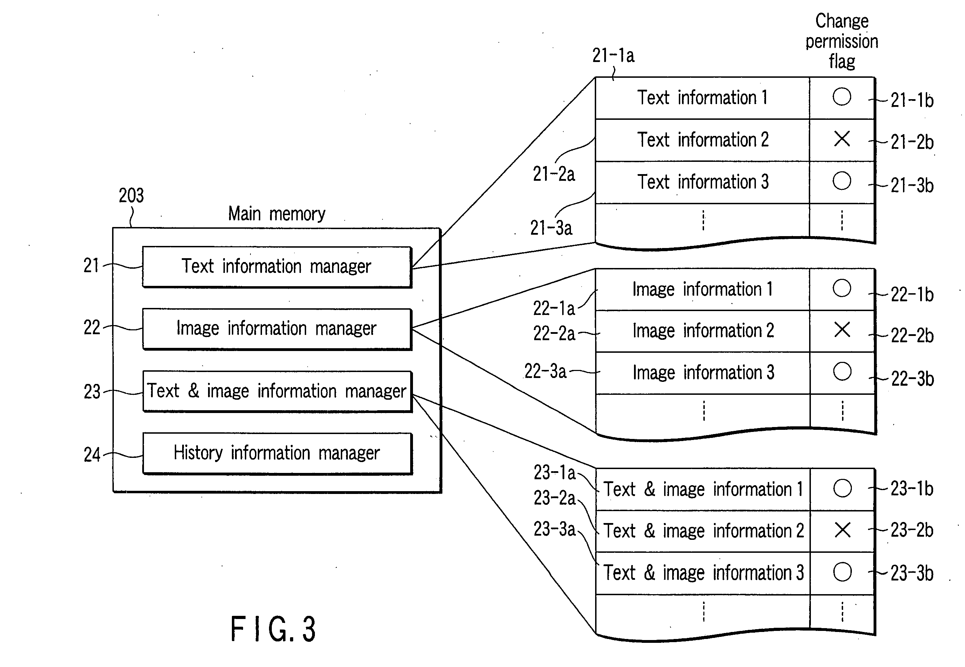

FIG. 3 shows information stored in the main memory 203.

As shown in FIG. 3, the main memory 203 comprises a text information manager 21, image information manager 22, text & image information manager 23, and history information manager 24.

The text information manager 21 stores text information (including numerical value information) (21-1a, 21-2a, 21-3a, ...) of information selected on the main display. The manager 21 also stores change permission flags (21-1b 21-2b, 21-3b, ...) corresponding to the text information (21-1a, 21-2a, 21-3a, ...) Each of these change permission flags (21-1b, 21-2b, 21-3b, ...) indicates whether or not corresponding text information can be changed, and can be freely set by the user.

According to embodiments of the present invention, the change permission flag will initially be set to X when the data includes file attribution and the file is a READ-ONLY file (note that if the file was stored in file form, then the data will include file attribution). Thus, if file attribution exists for the data, the file attribution will be reflected to the change permission flags shown in FIG. 4. That is, if the file is READ-ONLY, then the change permission flag is X. Otherwise, it will not be X.

On the other hand, if the file does not include file attribution, the change permission flag is set to X as the default. In either case, when the change permission flag is set to X, a user is prevented from mistakenly inputting information.

The image information manager 22 stores image information (22-1a, 22-2a, 22-3a, ...) of information displayed on the main display. Also, the manager 22 stores change permission flags (22-1b 22-2b, 22-3b, ...) corresponding to the image information (22-1a, 22-2a, 22-3a,...) Each of these change permission flags (22-1b, 22-2b, 22-3b,... ) indicates whether or not corresponding image information can be changed, and can be freely set by the user.

The text & image information manager 23 stores information (text information and image information (23-1a, 23-2a, 23-3a,...) selected on the main display. Also, the manager 23 stores change permission flags (23-1b, 23-2b, 23-3b, ...) corresponding to the text information and image information (23-1a, 23-2a, 23-3a, ...) Each of these change permission flags (23-1b, 23-2b, 23-3b,... ) indicates whether or not corresponding text information and image information can be changed, and can be freely set by the user.

For example, when information which contains both text information and image information is selected, the text information is stored in the text information manager 21, the image information is stored in the image information manager 22, and both the text information and image information are stored in the text & image information manager 23.

The history information manager 24 manages information managed by the text information manager 21, image information manager 22, and text & image information manager 23 in the form of a list, as shown in FIG. 4. This list basically stores selected information items in the order in which they are selected from the main display, and the user can edit this list using a GUI to be described later. Referring to FIG. 4, reference numeral 31 denotes a pointer which indicates information to be displayed on the sub-display. In FIG. 4, the pointer 31 indicates that "text & image information 1" is information to be displayed on the sub-display.

This pointer 31 is also movable using a GUI to be described later. The pointer 31 moves by toggling.

The operation of the information processing apparatus according to the embodiment of the present invention will be described below with reference to the flow chart in FIG. 5.

The operation for selecting information displayed on the main display to display the selected information on the sub-display (cPad), editing that information, and then displaying the edited information on the main display will be described first.

The user selects information (image information, numerical value information, text information, or the like) to be edited -displayed on the main display (S1).

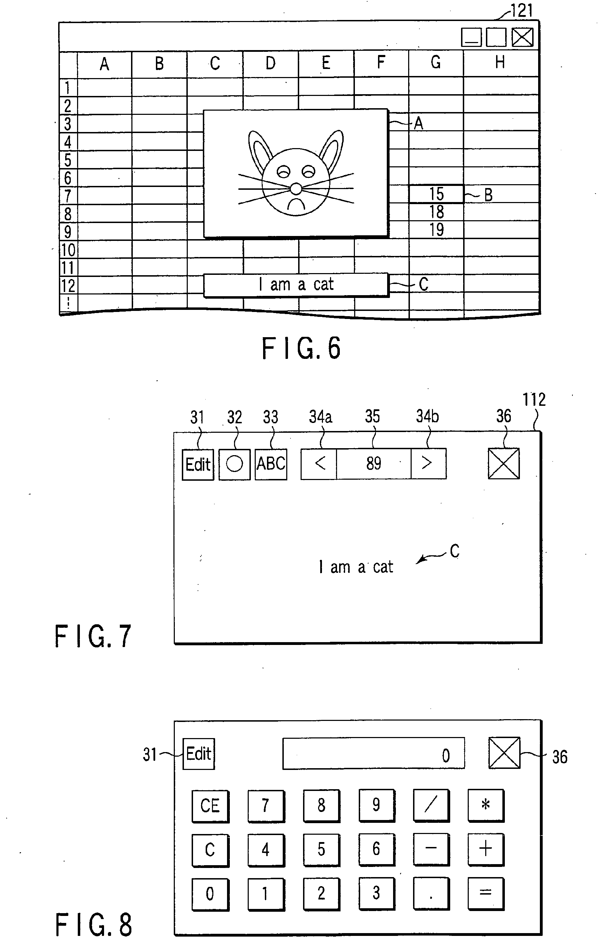

For example, when image information A, numerical value information B, and/or text information C are displayed on spreadsheet software on the main display 121, as shown in FIG. 6, the user selects one of the data to be edited by a pointing function of the cPad device 112.

After that, the selected information is stored in the main memory 203 (S2). For example, if image information A in FIG. 6 is selected, that selected information is stored in the image information manager 22, and is managed by the history information manager 24.

On the other hand, if numerical value information B and/or text information C is selected, these selected information items are stored in the text information manager 21, and are managed by the history information manager 24. At this time, the pointer 31 managed by the history information manager 24 moves to a position indicating information which was last stored.

After that, the type (image, numerical value, text information) of selected information is determined (S3). A GUI suitable for editing the selected information is displayed on the sub-display of the cPad device 112 on the basis of the type of information determined in step S3 (S4).

FIGS. 8 to 10 show GUIs displayed in correspondence with the types of information.

FIG. 8 shows a GUI displayed when the selected information is numerical value information, and this GUI implements a calculator function. For example, the user makes numerical value calculations on the calculator displayed on the sub-display, and can paste the result onto the main display.

Note that an "edit" user-selectable operator such as, but not limited to, edit button 31 in FIG. 8, is used to edit a list stored in the main memory, and this function will be explained later. An "end" user-selectable operator such as, but not limited to, end button 36, is used to close this edit GUI.

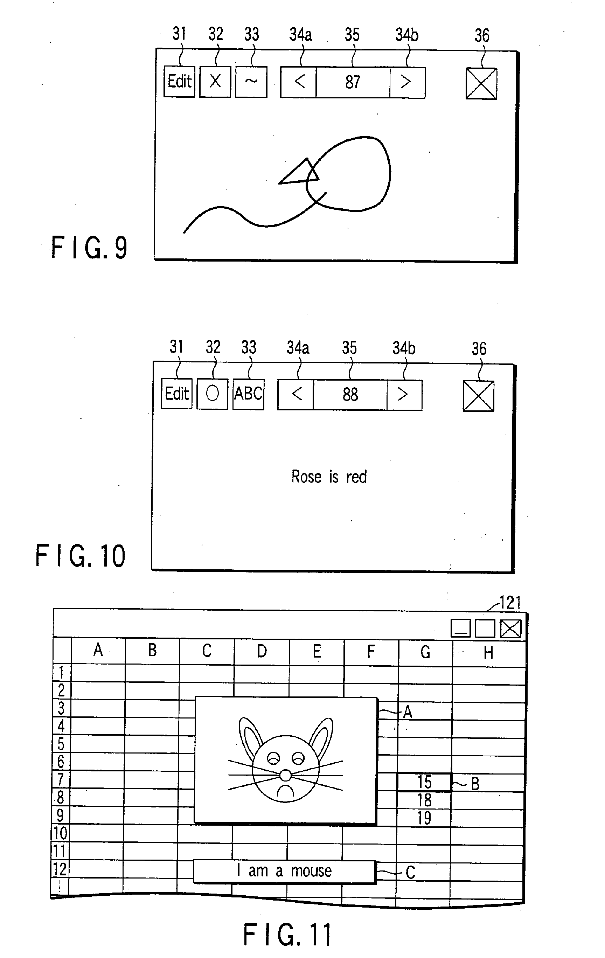

FIG. 9 shows a GUI displayed when the selected information is image information, and image information can be edited on this GUI. The image information may be edited directly from the sub-display using the tablet function of the cPad device 112, or may be edited using another input device such as a mouse, keyboard and the like. That is, the edit method in this case is not particularly limited.

Note that a user-selectable operator 32 in FIG. 9 indicates whether or not an edit process of information to be edited is permitted. FIG. 9 shows a case wherein the edit process is inhibited. By touching or otherwise selecting this user-selectable operator 32, permission/inhibition of the edit process can be switched using the tablet function of the cPad device 112, and that result is reflected in a change permission flag managed in the main memory.

A user-selectable operator 33 indicates information to be edited. FIG. 9 shows a case wherein image information is to be edited. By touching or otherwise selecting this user-selectable operator 33, information to be edited can be switched between image information-and text information using the tablet function of the cPad device 112.

User-selectable operators 34a and 34b are used to select information, which is managed by the information manager and is to be displayed on the sub-display. Every time the user presses the user-selectable operator 34a, the pointer of the list managed by the history information manager moves up in the list by one information item; every time the user presses the user-selectable operator 34b, the pointer of the list managed by the history information manager moves down in the list by one information item. As a result, an information item indicated by the pointer is displayed on the sub-display, and the user can select information by checking information displayed on the sub-display. A display field 35 displays a list number of information displayed on the sub-display. When the user has switched information to be displayed on the sub-display, a GUI corresponding to the type of selected information is displayed.

FIG. 10 shows a GUI when the information to be edited is text information. In FIG. 10, the user-selectable operator 32 indicates that text information can be edited, the user-selectable operator 33 indicates that the information to be edited is text information, and the list number of text information to be edited is "88".

After the process in step S4, the selected information is displayed on the sub-display (S5). For example, when text information C is selected on the main display shown in FIG. 6, a window shown in FIG. 7 is displayed on the sub-display. Note that FIG. 7 indicates that the GUI corresponding to text information is displayed, this information can be edited, and the information to be edited is text information.

As the edit method of text information, for example, the user may directly input/edit text on the sub-display using the tablet function of the cPad device 112 or may input/edit text from the keyboard or other input device.

According to embodiments of the present invention, the position of an edit cursor which indicates the position of text information to be edited may be designated from either the cPad device 112 or another input device such as a mouse, keyboard and the like.

Also, FIG. 7 shows a case wherein text information selected on the main display can fall within the window. However, when the selected information cannot entirely fall inside the window of the sub-display, a scroll bar may be displayed on the window of the sub-display to allow for scrolling of the display. In addition or in the alternative, the selected information may be displayed in a reduced or enlarged scale. Such display method can be arbitrarily selected by the user.

On the sub-display, the user edits the text information (S6). This edit method is not particularly limited. For example, the information may be edited using the GUI on the sub-display or another input device such as a mouse, keyboard and the like.

After the process in step S6, it is checked if the edit button has been selected (S7). If it is determined that the edit button has not been selected, the edited information is pasted at the original position on the main display (S8), i.e., the user can replace the original text with the edited text. FIG. 11 shows a case wherein the user edits text "I am a cat" to text "I am a mouse", and pastes the edited text at the original position on the main display.

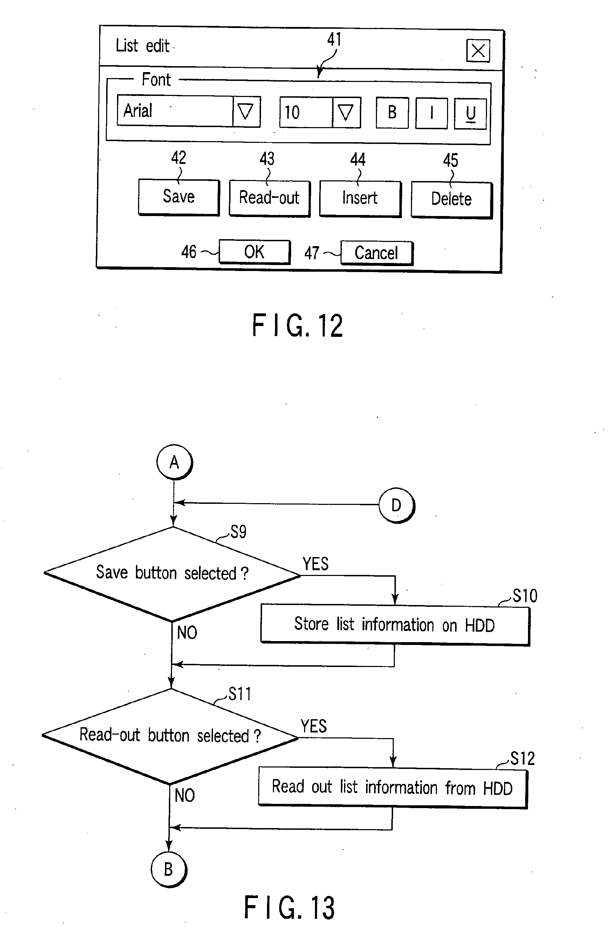

If it is determined in step S7 that the edit button has been selected, a window used to edit list information managed in the main memory is displayed on the sub-display, as shown in FIG. 12.

FIG. 12 shows a setup window used to edit text information, and a field 41 is used to designate a font, character size, and the like.

A "save" user-selectable operator such as, but not limited to, save button 42, is used to store text information in the HDD of the information processing apparatus. A "read out" user-selectable operator such as, but not limited to, read out button 43, is used to read out list information stored on the HDD.-An "insert" user-selectable operator such as, but not limited to, insert button 44, is used to insert a new information item before or after an information item indicated by the pointer 31 of those which are managed in the form of a list and are stored in the main memory. A "delete" user-selectable operator such as, but not limited to, delete button 45, is used to delete an information item indicated by the pointer 31.

An "OK" user-selectable operator such as, but not limited to, OK button 46, is used to accept the setups on the setup window, and a "cancel" user-selectable operator such as, but not limited to, cancel button 47, is used to cancel the setups on the setup window.

If it is determined in step S7 that the edit button has been selected, it is checked if the save button 42 has been selected (S9). If it is determined in step S9 that the save button has been selected, the list information managed in the main memory is stored on the HDD (S10).

On the other hand, if it is determined in step S9 that the save button has not been selected, or after the process in step S10 is complete, it is checked if the read-out button 43 has been selected (S11).

If it is determined in step S11 that the read-out button 43 has been selected, the list information is read out from the HDD (S12).

On the other hand, if it is determined in step S11 that the read-out button 43 has not been selected, or after the process in step S12 is complete, it is checked if the insert button 44 has been selected (S13).

If it is determined in step S13 that the insert button 44 has been selected, new information is inserted before or after information indicated by the pointer 31 of those which are managed in the form of a list and are stored in the main memory (S14).

On the other hand, if it is determined in step S13 that the insert button 44 has not been selected, or after the process in step S14 is complete, it is checked if the delete button 45 has been selected (S15).

If it is determined in step S15 that the delete button 45 has been selected, the current information item on the list that is indicated by the pointer is deleted (S16).

On the other hand, if it is determined in step S15 that the delete button 45 has not been selected, or after the process in step S16 is complete, it is then checked if the OK button 46 has been selected (S17).

If it is determined in step S17 that the OK button 46 has been selected, the edit contents are reflected in the memory (S18), and the flow returns to step S8. On the other hand, if it is determined in step S17 that the OK button 46 has not been selected, it is checked if the cancel button 47 has been selected (S19).

If it is determined in step S19 that the cancel button 47 has been selected, the flow returns to step S8; otherwise, the flow returns to step S9.

Therefore, with the information processing apparatus according to the embodiment of the present invention, information, which is selected on the main display, can be edited on the cPad device, and the edited information can be displayed on the main display. Hence, the need for the operation for opening a window, window switching operation, pointing operation, and the like can be obviated, thus reducing the load of user operations.

Also, since the user can edit the list which manages selected information on the CPad device, he or she need not open a window for displaying the selected information again, thus reducing the load of user operations.

Furthermore, all or some information items stored in the memory can be stored in the HDD of the information processing apparatus. Hence, even when the power supply is turned off, the stored information can be read out from the HDD, thus improving the work efficiency of the user.

Note that the present invention is not limited to the aforementioned embodiments, and various modifications may be made without departing from the scope of the invention when it is practiced. The respective embodiments may be combined as needed as much as possible, and combined effects can be obtained in such case. Furthermore, the embodiments include inventions of various stages, and various inventions can be extracted by appropriately combining a plurality of required constituent elements disclosed in this application. For example, when the invention is extracted by omitting some required constituent elements from all the required constituent elements in the embodiments, the extracted elements are compensated for by the state-of-the-art technique upon practicing the extracted invention.

## Claims

1. An information processing apparatus **characterized by** comprising:
a first means (121) for displaying information;
a second means (122) for displaying information, the second means being separate from the first means;
a selection means (S1) for selecting information displayed on the first means such that the selected information is displayed on the second means; and
an edit means (S6) for editing the information displayed on the second means.

2. The apparatus according to claim 1, **characterized in that** the information displayed on the second means is edited such that the edited information is displayed on the first means.

3. The apparatus according to claim 2, **characterized in that** displaying the edited information on the first means comprises replacing the selected information displayed on the first means with the edited information.

4. The apparatus according to claim 1, **characterized in that** the second means includes a touch interface means adapted for inputting instructions, the touch interface means being integral with the second means.

5. The apparatus according to claim 1, **characterized by** further comprising determination means for determining a type of the selected information;
wherein the second means displays a GUI (Graphical User Interface) corresponding to the type of the selected information determined by the determination means.

6. The apparatus according to claim 1, **characterized in that** the apparatus further comprises an input means for inputting information, wherein the edit means edits the information displayed on the second means based on an instruction received from the input means.

7. The apparatus according to claim 4, **characterized in that** the edit means edits the information displayed on the second means based on an instruction received from the touch interface means.

8. The apparatus according to claim 5, **characterized in that** the edit means edits the information displayed on the second means using the GUI (Graphical User Interface).

9. The apparatus according to claim 1, **characterized in that** the information displayed on the second means comprises at least one of image information and text information,
wherein the apparatus further comprises a first management means which manages the image information, a second management means which manages the text information, and a third management means which manages the image information and text information, and
wherein the edited information displayed on the first means is managed by at least one of the first management means, the second management means and the third management means.

10. The apparatus according to claim 1, **characterized by** further comprising storage means for storing the edited information.

11. The apparatus according to claim 1, **characterized by** further comprising storage means for storing the selected information.

12. In an information processing apparatus comprising a main display and a tablet device having a sub-display, an information editing method **characterized by** comprising:
selecting (S1) information displayed on the main display such that the selected information is displayed on the sub-display; and
editing (S6) the information displayed on the sub-display.

13. The method according to claim 12, **characterized by** further comprising displaying the edited information on the main display.

14. The method according to claim 13, **characterized in that** displaying the edited information on the main display comprises replacing the selected information on the main display with the edited information.

15. The method according to claim 12, **characterized in that** displaying the selected information on the sub-display comprises:
determining a type of the selected information; and
displaying on the sub-display a GUI (Graphical User Interface) corresponding to the determined type of the selected information.
